# EUROPEAN PATENT APPLICATION

(11) **EP 1 296 496 A2**
(43) Date of publication of application: **26.03.2003**
(21) Application number: 02021354.2
(22) Date of filing: 23.09.2002
(51) Int. Cl.: H04L 29/06, H04M 1/253

(54) **Communication apparatus**

(30) Priority: 21.09.2001 JP 2001289603
(71) Applicant: Sharp Kabushiki Kaisha, Osaka-shi, Osaka 545-8522 (JP)
(72) Inventor: Hachinoda, Masayuki, Nara-shi, Nara (JP)
(74) Representative: Müller - Hoffmann & Partner

(57) **Abstract**

An object of the present invention is to provide a communication apparatus which is capable of communication based on plural different communication methods in one apparatus, A main phone (1) of a telephone with a cordless handset (50) comprises communication section (9) which is provided with plural different communication methods, selection section (10) which selects a communication method, and control section (11) which controls so as to enable communication based on one communication method having been selected. The selection section (10) selects one communication method from among the plural different communication methods provided in the communication section (9), and in response to a signal of a selection result, the control section (11) controls so as to enable communication based on the one communication method having been selected. Since this enables communication based on plural different communication methods in one communication apparatus, it becomes possible to receive a lot of services.

## Description

### BACKGROUND OF THE INVENTION

### 1. Field of the Invention

The present invention relates to a communication apparatus which is capable of receiving and transmitting information described in HTML or simplified HTML.

### 2. Description of the Related Art

In recent years, a communication method which allows connecting to the Internet and receiving and transmitting information described in HTML or simplified HTML is provided not only in a personal computer (referred to as PC, hereinafter) but also in a lot of home electrical appliances, especially, in telephones such as portable telephones.

A communication method normally used at the time of using the Internet is TCP/IP as a standard protocol, and an OS (operating system) which conforms to TCP/IP is installed in a PC which is capable of connection to the Internet. For example, telephones mentioned above as an example of home electric appliances are also provided with TCP/IP in addition to a communication method such as a telephone communication method or a facsimile communication method, thereby becoming capable of connection to the Internet, and becoming capable of data communication such as reception and transmission of e-mails.

However, an area of a display screen which displays information provided in a telephone is small as compared with an area of a display screen of a PC, so that there is a problem that information on the Internet described in HTML received by communication based on TCP/IP cannot be displayed in a lump on a display screen which has a small area provided in a telephone.

For the purpose of solving this problem, communication carriers (referred to as carriers hereafter) which provide communication lines enable connection to the Internet by their original communication methods in which a description language is simplified HTML and which are different from TCP/IP, and provide services including a function as an Internet service provider. Telephones provided with these communication methods are capable of reception and transmission of information described in simplified HTML by an operation of keys provided in the telephones, and communication information is displayed so as to adapt to small-area display screens provided in the telephones. Furthermore, the carriers provide a lot of contents available by communication based on their original communication methods, and users access the contents and receive a variety of services by communication through the use of the telephones.

Since the respective carriers exercise ingenuity in their contents available by communication based on their original communication methods and provide services differentiated from those of the other carriers, the users strongly desire to use services of plural carriers. However, the respective carriers adopt different communication methods, so that it is impossible to perform communication based on different communication methods by using a telephone provided with only one communication method. Therefore, there is a problem that in the case of desiring to use plural different communication methods, the users must purchase telephones provided with the respective communication methods.

### SUMMARY OF THE INVENTION

An object of the present invention is to provide a communication apparatus which enables communication based on plural different communication methods in one apparatus.

The invention provides a communication apparatus which is capable of receiving and transmitting information described in Hyper Text Markup Language (HTML) or simplified HTML, the communication apparatus comprising:
communication means, provided with plural different communication methods, for enabling communication based on any one of the plural different communication methods;
selection means for selecting one communication method from among the plural different communication methods; and
control means, in response to a signal of a selection result outputted from the selection means, for controlling the communication means so as to allow communication based on the one communication method selected from among the plural different communication methods.

According to the invention, selection means selects one communication method from among plural different communication methods provided in communication means, and in response to a signal of a selection result outputted from the selection means, control means controls communication means so as to allow communication based on the one communication method having been selected. Since this enables communication based on plural different communication methods by the use of one communication apparatus, it becomes possible to receive a lot of services.

Further, in the invention it is preferable that one of the plural different communication methods is Transmission Control Protocol/Internet Protocol (TCP/IP).

According to the invention, the communication means is provided with TCP/IP as a standard protocol, which is generally used as the communication methods, and transmission and reception of information on the Internet described in HTML and e-mails becomes possible, so that it is possible to receive communication information services which are widely spread.

Still further, in the invention it is preferable that one of the plural different communication methods is a communication method which is different from TCP/IP and a communication method which allows utilizing contents described in simplified HTML.

According to the invention, the communication means is provided with a communication method which allows utilizing contents described in simplified HTML, so that it is possible to receive services based on a communication method which is different from TCP/IP.

Still further, in the invention it is preferable that one of the plural different communication methods is a communication method which is different from TCP/IP and a communication method which allows utilizing contents described by one of the plural simplified HTMLs and contents described in other different simplified HTML from the aforementioned simplified HTML.

According to the invention, the communication means is provided with a communication method which allows utilizing contents described in one of the plural simplified HTMLs and contents described by other simplified HTML different from the simplified HTML, so that it is possible to receive services based on a communication method which is different from TCP/IP.

Still further, in the invention it is preferable that the control means includes storing means for storing information on designating one communication method previously selected from among the plural different communication methods, and in response to the information read out of the storing means, the control means controls the communication means so as to enable communication based on the one communication method previously selected.

According to the invention, storing means stores information on designating one communication method previously selected, and in response to the information read out of the storing means, the control means controls the communication means so as to enable communication based on the one communication method previously selected. As a result, it is possible to automatically perform communication based on one communication method previously selected from among the plural different communication methods, and receive services provided by the selected communication method.

Still further, in the invention it is preferable that the selection means includes:
display means for displaying the plural different communication methods; and
input means for inputting a signal selecting one communication method from among the plural different communication methods displayed on the display means, and
the control means controls the communication means so as to enable communication based on the one selected communication method in response to the signal inputted by the input means.

According to the invention, input means inputs a signal selecting one communication method from among the plural communication methods displayed on display means, and in response to the inputted signal, the control means controls the communication means so as to enable communication based on the one selected communication method. As a result, it becomes possible to select a communication method to use from among the plural different communication methods in a simple operation and perform communication, and it is possible to receive services provided by a selected communication method.

Still further, in the invention it is preferable that the selection means includes operation keys provided so as to input a signal designating a communication method corresponding to each of the plural different communication methods, and
the control means controls the communication means so as to enable communication based on one selected communication method in response to the signal inputted by the operation keys.

According to the invention, when one of the operation keys provided in the selection means is selected and pressed down, a signal designating one communication method from among the plural different communication methods is thereby inputted, and in response to the inputted signal, the control means controls the communication means so as to enable communication based on the one selected communication method. As a result, it becomes possible to select one communication method from among the plural different communication methods in a simple operation and perform communication, and it is possible to receive services provided by the selected communication method.

Still further, in the invention it is preferable that the storing means stores the cumulative numbers of performed communications for the respective communication methods, and
the control means further includes comparison means which compares the cumulative numbers read out of the storing means, and in response to a comparison result of the comparison means, controls the communication means so as to enable communication based on a communication method of the most cumulative number.

According to the invention, comparison means compares cumulative numbers of performed communications stored in the storing means for the respective communication methods, and the control means controls the communication means so as to enable communication based on a communication method of the most cumulative number. As a result, it becomes possible to automatically select a communication method of the most number of performed communications from among the plural different communication methods and perform communication, and it is possible to receive services provided by a selected communication method.

Still further, in the invention it is preferable that the control means controls the communication means so as to enable communication only by a predetermined communication method of the plural different communication methods.

According to the invention, the control means controls the communication means so as to enable communication only by a predetermined communication method of the plural different communication methods provided in the communication means. As a result, a communication apparatus which is capable of communication only by a predetermined communication method and a communication apparatus which is capable of communication by plural communication methods can be realized by apparatuses of the same configuration, so that it becomes possible to standardize models and members, and it is possible to reduce costs.

According to the invention, one communication apparatus is provided with plural different communication methods of TCP/IP, which is generally used and enables transmission and reception of information on the Internet described in HTML and e-mails, a communication method which allows utilizing contents described in simplified HTML, and a communication method which allows utilizing contents described in simplified HTML and contents described in different simplified HTML, and it is possible to perform communication based on these communication methods, so that it becomes possible to receive a lot of services.

### BRIEF DESCRIPTION OF THE DRAWINGS

Other and further objects, features, and advantages of the invention will be more explicit from the following detailed description taken with reference to the drawings wherein:
Fig. 1 is a block diagram showing a schematic configuration of a main phone of a telephone with a cordless handset, which is an embodiment of the present invention;
Fig. 2 is a block diagram showing a schematic diagram of a cordless handset of the telephone with a cordless handset;
Fig. 3 is a perspective view showing an appearance of the telephone with a cordless handset;
Fig. 4 is a flowchart showing a first operation procedure for selecting a communication method;
Fig. 5 is a flowchart showing a second operation procedure for selecting a communication method;
Fig. 6 is a flowchart showing a third operation procedure for selecting a communication method; and
Fig. 7 is a flowchart showing a fourth operation procedure for selecting a communication method.

### DETAILED DESCRIPTION OF THE PREFERRED EMBODIMENT

Now referring to the drawings, preferred embodiments of the invention are described below.

Although the present invention is realized as a variety of communication apparatuses which are capable of receiving and transmitting information described in HTML or simplified HTML, a telephone with a cordless handset will be exemplified here as a preferable embodiment.

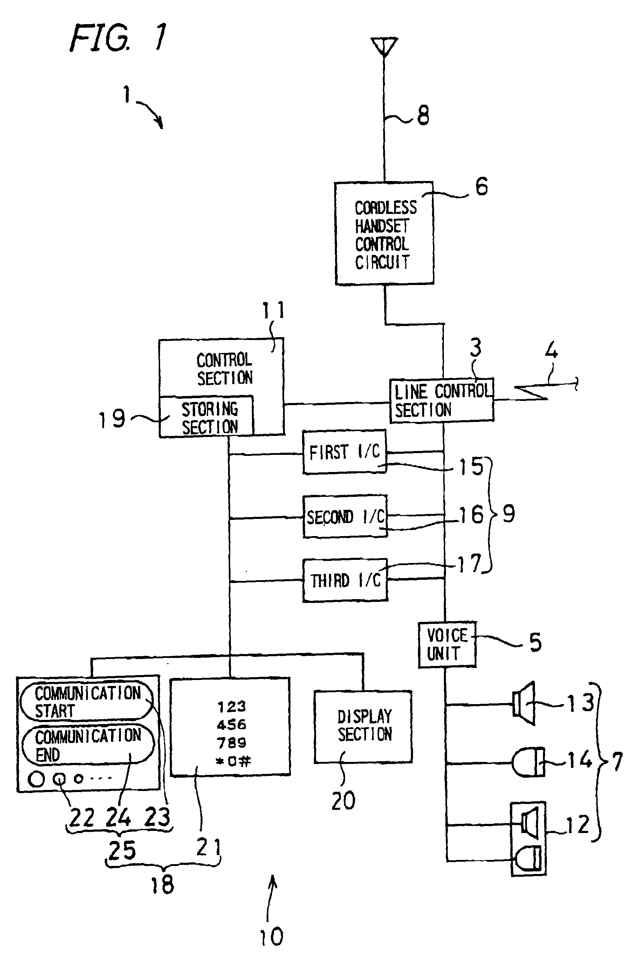

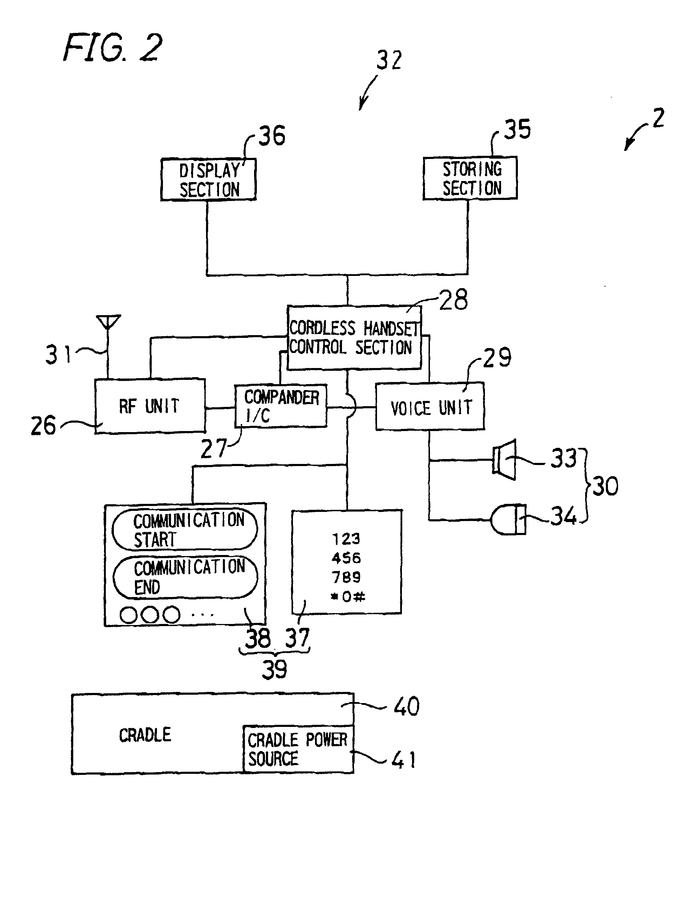

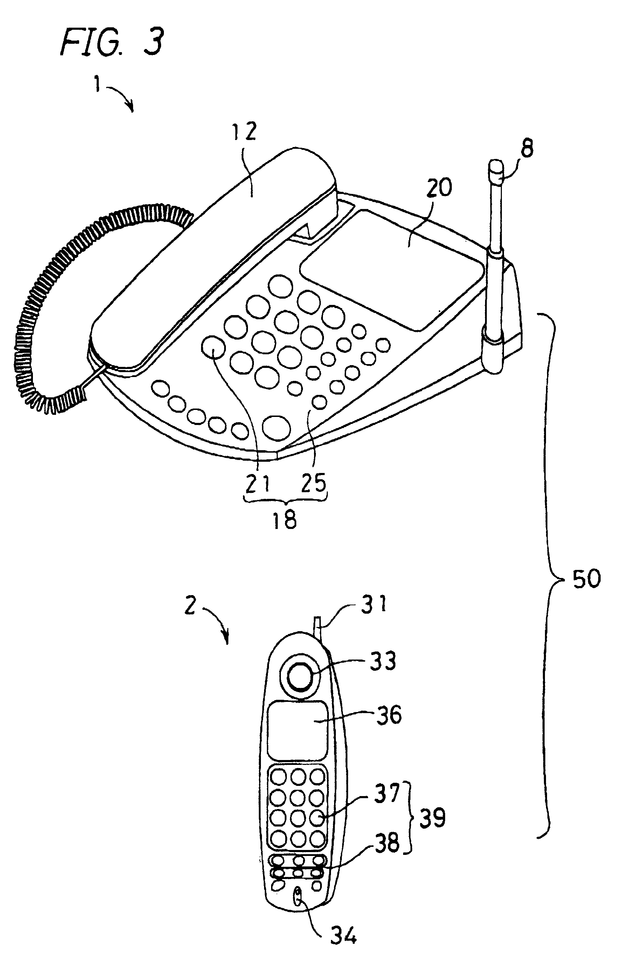

Fig. 1 is a block diagram showing a schematic diagram of a main phone 1 of a telephone with a cordless handset 50, which is an embodiment of the invention, Fig. 2 is a block diagram showing a schematic diagram of a cordless handset 2 of the telephone with a cordless handset 50, and Fig. 3 is a perspective view showing an appearance of the telephone with a cordless handset 50.

The main phone 1, which is a main unit of the telephone with a cordless handset 50 (referred to as telephone 50, hereinafter), comprises line control section 3 as line control means, a telephone line 4, a voice unit 5, a cordless handset control circuit 6, voice input/output section 7, an antenna 8, communication section 9 as communication means, selection section 10 as selection means and control section 11 as control means.

The main phone 1 is connected to the telephone line 4 by the line control section 3. The line control section 3 monitors a state of the telephone line 4, and switches a line between the voice unit 5 and the cordless handset control circuit 6. Moreover, a modem, which is not shown, is provided, and reads a caller number transmitted at 2400 bps by a caller display service. The voice unit 5 amplifies voice signals, and enables input and output of voices through a handset 12, a speaker 13 and a microphone 14, which are provided in the voice input/output section 7. The handset 12 has a receiver and a transmitter for telephone communication.

The cordless handset control circuit 6 is provided with a control section which performs search, establishment and so on of a communication path with the cordless handset 2, a compander section which compresses and reconstructs signals, a tuner which transmits and receives radio waves, and so on. Via the antenna 8 provided in the cordless handset control circuit 6, radio waves are transmitted and received to and from the cordless handset 2. For example, when a signal directing communication with the cordless handset 2 is outputted from the control section 11 to the cordless handset control circuit 6, the cordless handset control circuit 6 performs search of an unused control channel, transmission of a call-in signal including an ID code (identification code) of the main phone 1 by the use of an unused control channel which enables communication, search of a communication channel, designation of a communication channel to use, transmission of a channel designation signal, and the like, and when a communication path with the cordless handset 2 is established and communication is ended, the cordless handset control circuit performs a communication end process such as reception of a communication end signal and disconnection of the communication path. In this manner, the cordless handset control circuit 6 performs all of the processes from establishment of communication with the cordless handset 2 to finish of the communication.

The communication section 9 includes three different communication methods which allow reception and transmission of information described in HTML or simplified HTML. That is, the communication section 9 has the plural (three, in the embodiment of the invention) different communication methods and enables communication based on any one of the communication methods. One of the three different communication methods is TCP/IP as a standard protocol. Since this enables transmission and reception of information on the Internet described in HTML and e-mails, it is possible to receive communication information services which are widely spread.

Moreover, the other one is a communication method which allows utilizing contents described in simplified HTML and which is different from TCP/IP. Furthermore, the other one is a communication method which allows utilizing contents described in simplified HTML and contents described in different simplified HTML and which is different from TCP/IP. Consequently, it is possible to receive services based on communication methods different from TCP/IP. The main phone 1 is provided with a first I/C (integrated circuit) 15 which enables communication by TCP/IP, a second I/C 16 which enables communication using contents described in simplified HTML, and a third I/C 17 which enables communication using plural contents described in simplified HTML.

Although the embodiment has the first to third I/Cs 15 to 17 in order to realize the three different communication methods, it may have a configuration of using a single I/C which consolidates all these functions.

The selection section 10 includes input section 18 and display section 20. The input section 18 is provided with a keyboard section 21 which has plural numerical keys for inputting a telephone number and so on, and an operation key section 25 which includes keys 22 predetermined so as to input a signal designating a communication method corresponding to the three different communication methods, a communication start key 23 and a communication end key 24.

The display section 20 displays information such as a name of a communication method, a communication time, a called number and a caller number. Moreover, the display section 20 displays information such as a method for inputting a telephone number to connect of each communication method read out of storing section 19 as storing means provided in the control section 11 and a method for registering a URL (uniform resource locator) and a mail address, and gives guidance on inputting, whereby it is possible for an operator to interactively set a variety of parameters of communication based on each communication method of the telephone 50 by using the keyboard section 21 and the operation key section 25 provided in the input means 18.

The control section 11 is realized by, for example, a processing circuit equipped with a CPU (central processing unit), and controls the telephone 50 in accordance with a control program stored in the storing section 19. The control section 11 is provided with the storing section 19. The storing section 19 is, for example, a memory constituted by a ROM (read only memory), a RAM (random access memory) and the like, a control program is stored in the ROM, and information inputted by the input section 18 and the like are stored in the RAM. In the storing section 19, information necessary for the three communication methods, for example, names of the communication methods and telephone numbers to connect are stored. Moreover, information on designating a previously selected communication method is stored. Besides, specific keys of the operation key section 25 are associated with the first to third I/Cs 15 to 17. When one of the associated keys is pressed down, information on a communication method designated by the key is read out of the storing section 19 by the control section 11. In addition, in the storing section 19, the cumulative numbers of performed communications for the respective communication methods are stored.

The control section 11 executes the following methods for selecting a communication method in accordance with the control program. Based on information on designating a previously selected communication method stored in the storing section 19, the control section 11 controls so as to enable communication based on the selected communication method. Moreover, the control section 11 controls so as to enable communication based on one communication method selected by the input section 18 from among the three different communication methods read out of the storing section 19 and displayed on the display section 20. Furthermore, the control section 11 controls so as to enable communication based on a communication method associated with a key having been pressed down of the keys designating a communication method. Besides, the control section 11 compares the cumulative numbers of performed communications for the respective communication methods stored in the storing means 19, and controls so as to enable communication based on a communication method of the most cumulative number. From among these methods for selecting a communication method, it is possible to previously select and set one selection method by the use of the input section 18. In addition, it is also possible to select and set a method for selecting a communication method by the use of the input section 18 every time when using the telephone 50.

Further, based on information inputted through the keyboard section 21 and the operation key section 25 provided in the input section 18, a signal indicating a state from each section and a signal from the telephone line 4, the control section 11 decides an operation of the entire telephone 50 and gives a direction, and then outputs signals regarding switching of display, contents of display and the like to the display section 20.

As the cordless handset 2, a small member is used so as to meet the need for downsizing an apparatus. The cordless handset 2 comprises an RF (radio frequency) unit 26, a compander I/C 27, cordless handset control section 28, a voice unit 29, voice input/output section 30, an antenna 31 and selection section 32. The voice input/output means 30 includes a speaker 33 and a microphone 34. The selection section 32 includes storing section 35, display section 36, and input means 39 provided with a keyboard section 37 and an operation key section 38. Here, in the cordless handset 2, a member of the same name as a member constituting the main phone 1 has the same function.

Although the main phone 1 is connected to the telephone line 4 by the line control section 3, the cordless handset 2 is not provided with line control section, and therefore, performs radio communication with the main phone 1 by the RF unit 26 via the antenna 31, and by being connected to the telephone line 4 via the main phone 1, performs communication with an external communication apparatus.

The RF unit 26 is a unit whose main body is a tuner for transmitting and receiving radio waves including signal information such as voice signals and control signals. The RF unit 26 superimposes signal information compressed non-linearly on carrier wave, that is, modulates compressed signal information to transmit. Further, the RF unit 26 selects and picks up only a necessary band from the received radio waves in which the compressed signal information is superimposed on carrier waves, to demodulate the compressed signal information.

The compander I/C 27 compresses signal information to be transmitted so as to be nonlinear, performs an amplification process or an attenuation process of the intensity of transmitted/received voice signals and controls so that the intensity is within a predetermined intensity range, and extends and decompresses the received compressed signal information. Hereby, clear communication can be carried out despite of the volume of voice.

The cordless handset control section 28 receives a signal outputted from each section of the apparatus provided in the cordless handset 2, outputs an operation direction signal to each section in response to the received signal, and performs communication with the cordless handset control circuit 6 and performs each process required for establishment and disconnection of a communication path, such as confirmation of an unused control channel to have charge of control of communication with the main phone 1 and an unused communication channel and confirmation of an ID code.

Furthermore, the cordless handset 2 is provided with a cradle 40, which is a unit separated from the cordless handset 2. The cradle 40 includes a charging DC (direct current) power source as a cradle power source 41. The cordless handset 2 is put on the cradle 40 and charged when not used.

Processing procedures at the time of selecting one communication method from among the three communication methods and performing communication by the use of the main phone 1 will be described below. Here, in the case of performing communication based on the three communication methods by the use of the cordless handset 2, by using the first to third I/Cs 15 to 17 provided in the main phone 1 and converting to a page setup in response to a display ability of the display section 36 provided in the cordless handset 2, information is transmitted from the main phone 1 to the cordless handset 2.

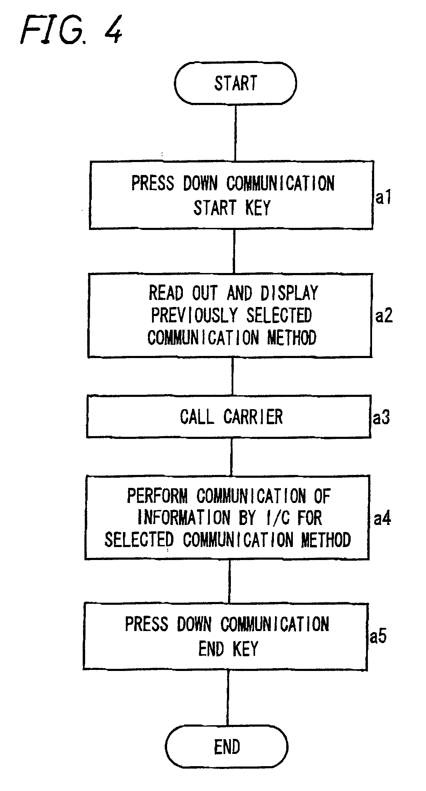

Fig. 4 is a flowchart showing a first operation procedure for selecting a communication method. In Fig. 4, an operation procedure in a state where one communication method of the three communication methods is previously selected by the user and communication is to be performed based on the selected communication method will be described. At step a1, the user presses down the communication start key, and a start signal is transmitted to the control section 11. At step a2, the control section 11 reads out information on the previously selected communication method from the storing section 19, and displays on the display section 20. Then, at step a3, the control section 11 calls a carrier adopting the selected communication method. At step a4, an I/C for the selected communication method is operated by the control section 11, and information is received and transmitted. At step a5, when transmission and reception of information is finished, the communication end key is pressed down by the user. Thus, a series of communication operation is finished.

As a result, it is possible to automatically perform communication based on one communication method previously selected from among the plural different communication methods, and receive a service provided by the selected communication method.

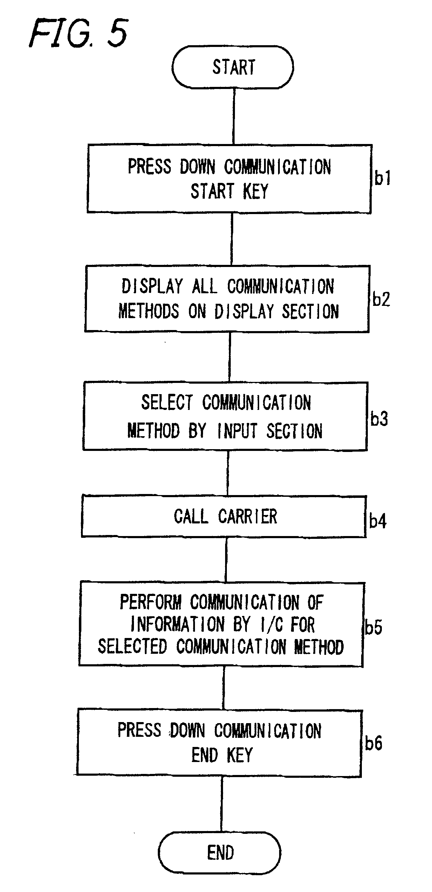

Further, Fig. 5 is a flowchart showing a second operation procedure for selecting a communication method. In Fig. 5, an operation procedure in a state where all of the three different communication methods are displayed on the display section 20, the user selects one communication method by the use of the input section 18, and communication is to be performed by the selected communication method will be described. At step b1, the user presses down the communication start key, and a start signal is transmitted to the control section 11. At step b2, the control section 11 displays the three different communication methods provided in the communication means 9 on the display section 20. At step b3, the user selects one communication method from among the communication methods displayed on the displayed section 20 by the use of the input section 18. At step b4, a carrier adopting the selected communication method is called by the control section 11. At step b5, an I/C for the selected communication method is operated by the control section 11, and information is received and transmitted, At step b6, when transmission and reception of information is finished, the communication end key is pressed down by the user. Thus, a series of communication operation is finished.

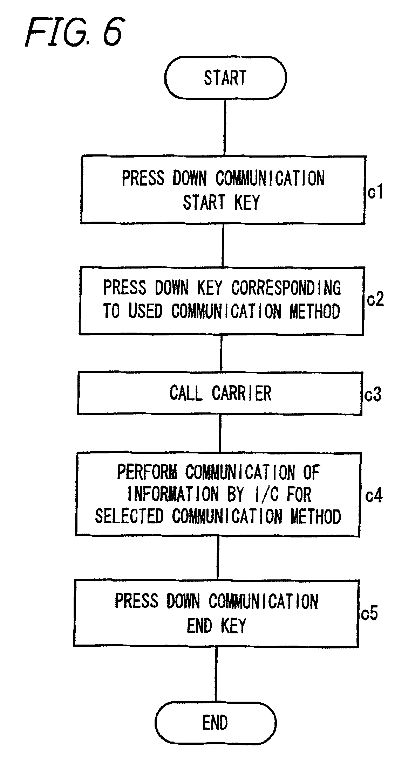

Still further, Fig. 6 is a flowchart showing a third operation procedure for selecting a communication method. In Fig. 6, an operation procedure in a state where one communication method is selected from among the three communication methods by pressing down the key 22 predetermined so as to input a signal designating a communication method provided in the operation key section 25 and communication is to be performed by the selected communication method will be described. At step c1, the user presses down the communication start key, and a start signal is transmitted to the control section 11. At step c2, the user selects and presses down a key designating a communication method of the user's choice. At step c3, in response to an inputted signal, the control section 11 reads out information on the selected communication method from the storing section 19, displays the information on the display means 20, and calls a carrier adopting the selected communication method. At step c4, an I/C for the selected communication method is operated by the control section 11, and information is transmitted and received. At step c5, when transmission and reception of information is finished, the communication end key is pressed down by the user. Thus, a series of communication operation is finished.

As a result, it becomes possible to select one communication method from among the plural different communication methods in a simple operation and perform communication, and it is possible to receive a service provided by a selected communication method.

Furthermore, the telephone 50 may have a configuration of further having comparison means in the control section 11. Every time when communication is performed, the cumulative numbers of performed communications are stored in the storing section 19 for the respective communication methods. The comparison means reads out and compares the cumulative numbers of performed communications for the respective communication methods stored in the storing section 19, respectively. In response to a comparison result, the control means 11 selects a communication method. A procedure for selecting a communication method by using the comparison means will be described below.

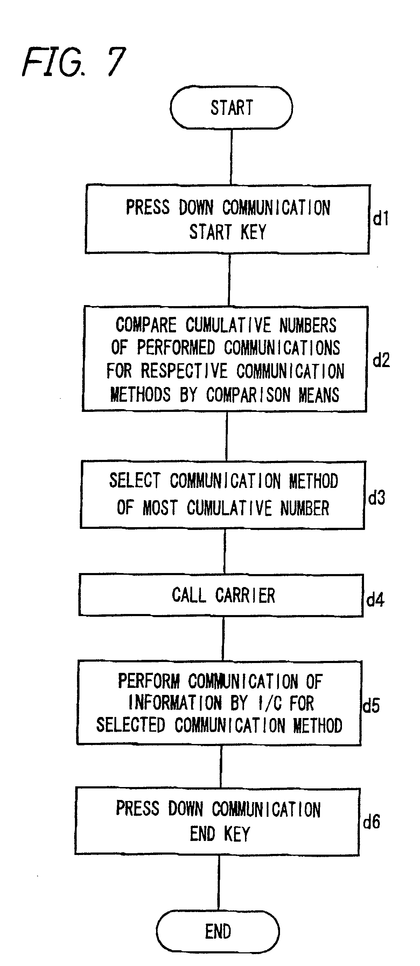

Fig. 7 is a flowchart showing a fourth operation procedure for selecting a communication method. In Fig. 7, an operation procedure in a state where a communication method of the most cumulative number of performed communications is selected from among the three communication methods and communication is to be performed by the selected communication method. At step d1, the user presses down the communication start key, and a start signal is transmitted to the control section 11. At step d2, the comparison means respectively compares the cumulative numbers of the performed communications for the respective communication methods, and outputs a comparison result to the control section 11. At step d3, in response to the comparison result, the control section 11 selects a communication method of the most cumulative number. At step d4, the control section 11 displays information on the selected communication method on the display section 20, and calls a carrier adopting the selected communication method. At step d5, an I/C for the selected communication method is operated by the control section 11, and information is received and transmitted. At step d6, when transmission and reception of information is finished, the communication end key is pressed down by the user. Thus, a series of communication operation is finished.

As a result, it becomes possible to automatically select a communication method of the most number of performed communications from among the plural different communication methods and perform communication, and it is possible to receive a service provided by a selected communication method.

In addition, other than a configuration of separately using the first to fourth operation procedures for selecting a communication method, a configuration of using the operation procedures in association with each other may be adopted.

In this manner, the telephone 50 is capable of communication based on plural different communication methods in one communication apparatus, so that it becomes possible to receive a lot of services.

As described above, according to the embodiment, the telephone 50 is set so as to enable communication by plural different communication methods, whereas without being restricted to this, the telephone may be controlled by the control section 11 so as to allow use of only a predetermined communication method of plural different communication methods provided in the communication section 9 in response to a request of the user. Moreover, the communication section 9 has a configuration of being provided with three different communication methods, whereas without being restricted to this, the communication means may have a configuration of being provided with more than three different communication methods.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. A communication apparatus which is capable of receiving and transmitting information described in Hyper Text Markup Language (HTML) or simplified HTML, the communication apparatus comprising:
communication means (9), provided with plural different communication methods, for enabling communication based on any one of the plural different communication methods;
selection means (10) for selecting one communication method from among the plural different communication methods; and
control means (11), in response to a signal of a selection result outputted from the selection means (10), for controlling the communication means (9) so as to allow communication based on the one communication method selected from among the plural different communication methods.

2. The communication apparatus of claim 1, wherein one of the plural different communication methods is Transmission Control Protocol/Internet Protocol (TCP/IP).

3. The communication apparatus of claim 2, wherein one of the plural different communication methods is a communication method which is different from TCP/IP and a communication method which allows utilizing contents described in simplified HTML.

4. The communication apparatus of claim 3, wherein one of the plural different communication methods is a communication method which is different from TCP/IP and a communication method which allows utilizing contents described by one of the plural simplified HTMLs and contents described in other different simplified HTML from the aforementioned simplified HTML.

5. The communication apparatus of any one of claims 1 to 4, wherein the control means (11) includes storing means (19) for storing information on designating one communication method previously selected from among the plural different communication methods, and
in response to the information read out of the storing means (19), the control means (11) controls the communication means (9) so as to enable communication based on the one communication method previously selected.

6. The communication apparatus of any one of claims 1 to 4, wherein the selection means (10) includes:
display means (20) for displaying the plural different communication methods; and
input means (18) for inputting a signal selecting one communication method from among the plural different communication methods displayed on the display means (20), and
wherein the control means (11) controls the communication means (9) so as to enable communication based on the one selected communication method in response to the signal inputted by the input means (18).

7. The communication apparatus of any one of claims 1 to 4, wherein the selection means (10) includes operation keys (25) provided so as to input a signal designating a communication method corresponding to each of the plural different communication methods, and
wherein the control means (11) controls the communication means (9) so as to enable communication based on one selected communication method in response to the signal inputted by the operation keys (25).

8. The communication apparatus of any one of claims 1 to 4, wherein the storing means (19) stores the cumulative numbers of performed communications for the respective communication methods, and
wherein the control means (11) further includes comparison means which compares the cumulative numbers read out of the storing means (19), and in response to a comparison result of the comparison means, controls the communication means (9) so as to enable communication based on a communication method of the most cumulative number.

9. The communication apparatus of any one of claims 1 to 4, wherein the control means (11) controls the communication means (9) so as to enable communication only by a predetermined communication method of the plural different communication methods.
